# EUROPEAN PATENT SPECIFICATION

(11) **EP 4 544 198 B1**
(45) Date of publication and mention of the grant of the patent: **06.05.2026**
(21) Application number: 22736322.3
(22) Date of filing: 22.06.2022
(51) Int. Cl.: F16C 17/02, F16C 33/10, F16C 9/04

(54) **BEARING SHELL, BEARING, PISTON ENGINE AND USE OF A BEARING SHELL**
LAGERSCHALE, LAGER, KOLBENMOTOR UND VERWENDUNG EINER LAGERSCHALE
COQUILLE DE PALIER, PALIER, MOTEUR À PISTON ET UTILISATION D'UNE COQUILLE DE PALIER

(43) Date of publication of application: 30.04.2025
(73) Proprietor: Wärtsilä Finland Oy, 65170 Vaasa (FI)
(72) Inventor: HALLA-AHO, Pasi, 65170 Vaasa (FI); PERINEL, Luciano, 34018 Trieste (IT); ISTOLAHTI, Jaakko, 65170 Vaasa (FI); LEPPÄKANGAS, Janne Joonas, 65170 Vaasa (FI); VESALA, Jukka-Pekka, 65170 Vaasa (FI)
(74) Representative: Berggren Oy
(86) International application number: PCT/FI2022/050449
(87) International publication number: WO 2023/247817

(56) References cited:
- EP-A1- 3 401 560
- WO-A1-2016/157575
- US-A- 4 201 176
- US-A1- 2014 126 847
- US-A1- 2017 307 005

## Description

### Technical field of the invention

The present invention concerns a bearing shell for a bearing that connects a connecting rod of a piston engine to a crankshaft, as defined in claim 1. The invention also concerns a bearing, a piston engine and a use of a bearing shell.

### Background of the invention

In a piston engine, a piston rod connects each piston to a crankshaft. The bearing connecting the piston rod to the crankshaft is often referred to as a big end bearing.

A typical big end bearing is a slide bearing comprising two halves that are arranged around a crankpin of the crankshaft. The bearing is rotationally fixed to the connecting rod and there is thus a rotational movement between the crankpin and the bearing. An oil film is formed between the inner surface of the bearing and the crankpin. Typically this type of bearing can be seen in EP 3 401 560 A1 (Volvo).

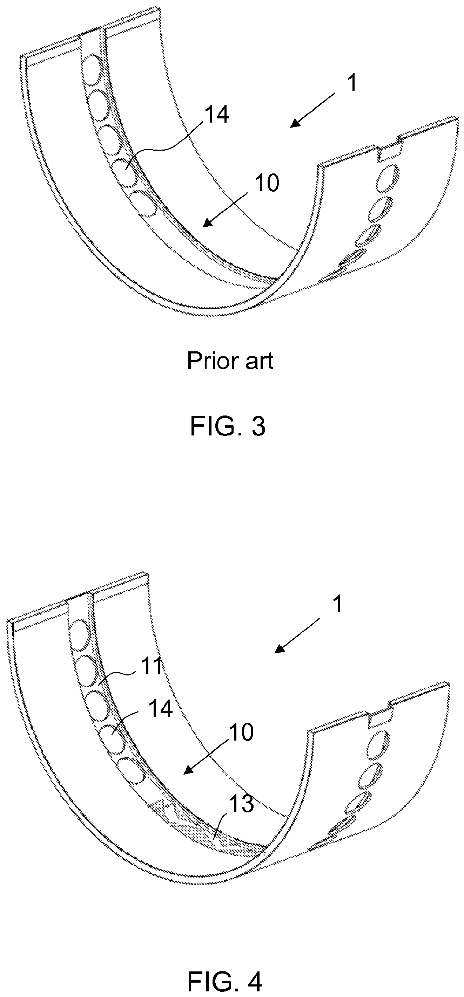

Often the lower half of the big end bearing is provided with an oil groove. The upper half of the bearing may have a level surface. The purpose of the oil groove is to facilitate spreading of lubricating oil on the bearing surface. The oil groove runs in the circumferential direction of the bearing in the middle of the bearing surface. Figure 3 shows an example of the lower half of a prior art big end bearing.

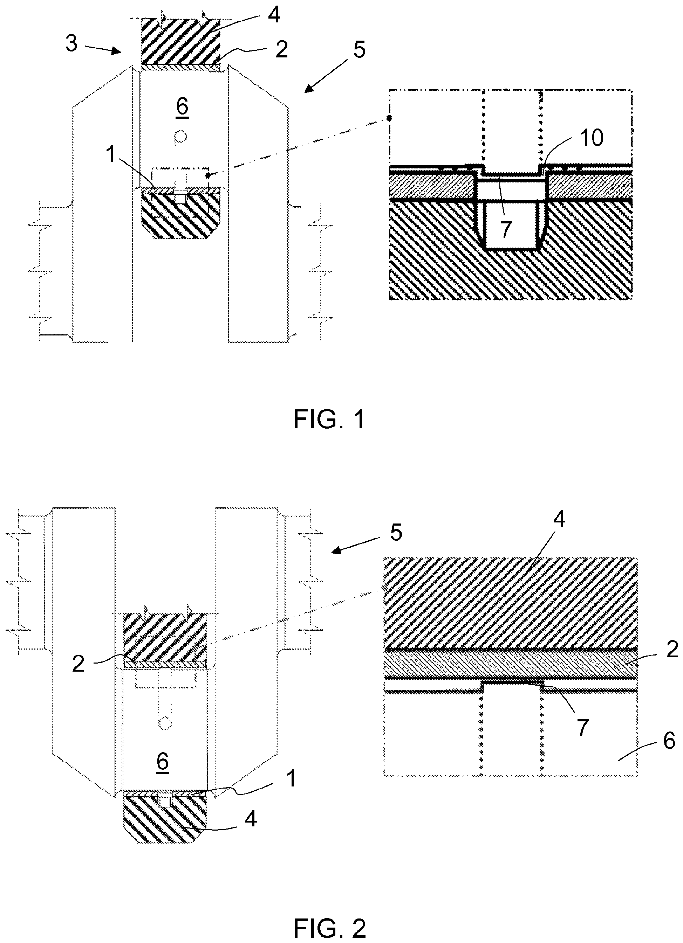

During use of the engine, the crankpin wears. However, the wear is not even. The crankpin wears more at the area that forms a lower part of the crankpin when the piston is at top dead center, as shown in figure 1. Even the lower part of the crankpin does not wear uniformly, but the area aligned with the oil groove of the bearing experiences less wear than the areas on either side of the oil groove. Due to the uneven wear, a protruding portion, i.e. a ridge can be formed in the middle of the crankpin. The height of the ridge can correspond to the thickness of the oil film. An exaggerated view of such a ridge in shown in the enlarged views of figures 1 and 2.

When the piston is around bottom dead center, as in the situation shown in figure 2, the ridge of the crankpin is in contact with the upper half of the bearing, which can cause problems, such as overloading and local wear of the upper half of the bearing. Problems can be encountered also after a new bearing has been changed at overhaul, because the protruding portion of the crankpin contacts a non-worn bearing surface and causes uneven loading.

### Summary of the invention

An object of the present invention is to provide an improved bearing shell for a bearing that connects a connecting rod of a piston engine to a crankshaft. The characterizing features of the bearing shell according to the invention are given in claim 1. Other objects of the invention are to provide an improved bearing, a piston engine and a use of a bearing shell.

The inner surface of the bearing shell according to the invention is provided with an oil groove, the oil groove comprising a first portion, a second portion and a third, intermediate portion connecting the first portion and the second portion, wherein the first portion and the second portion are straight and run in the circumferential direction of the bearing shell, and wherein the third portion is narrower than the first portion and the second portion and at least part of the third portion runs in a direction that deviates in an axial direction of the bearing shell from the circumferential direction of the bearing shell.

Because of the narrower groove, larger part of the bearing shell is in contact with the crankpin and the crankpin wears more uniformly. Because the direction of the third portion differs from the circumferential direction, continuous non-contact portions in the circumferential direction of the bearing shell can be reduced. This reduces forming of a ridge at the area of the oil groove.

According to an embodiment of the invention, the third portion is arranged between the imaginary extensions of the edges of the first portion and the second portion, or the third portion extends from said imaginary extensions in the axial direction of the bearing shell towards the sides of the bearing shell at most a distance corresponding to the width of the first portion and the second portion. This ensures that the third portion does not disturb forming of the oil film on the bearing surface.

According to an embodiment of the invention, the third portion does not extend in the axial direction of the bearing shell beyond the imaginary extensions of the edges of the first portion and the second portion. The third portion does thus not broaden the area of the oil groove in the axial direction.

According to an embodiment of the invention, the third portion is configured so that on each imaginary line drawn from the first portion to the second portion on the inner surface of the bearing shell in a circumferential direction, there is at least one section that is outside the third portion of the oil groove. There is thus no area on the outer surface of the crankpin that would not come into contact with the inner surface of the bearing shell, which helps keeping the wear of the crankpin more uniform.

According to an embodiment of the invention, the third portion extends in the circumferential direction of the bearing shell over an angle of 40-100 degrees.

According to an embodiment of the invention, the third portion is arranged in the circumferential direction in the middle of the bearing shell.

According to an embodiment of the invention, the width of the first portion and the second portion is 15-30 percent of the width of the bearing shell.

According to an embodiment of the invention, the width of the third portion is 20-60 percent of the width of the first portion and the second portion.

According to an embodiment of the invention, the oil groove is arranged in the axial direction of the bearing shell in the middle of the bearing shell.

According to an embodiment of the invention, the first portion extends in the circumferential direction to a first end of the bearing shell and the second portion extends to a second end of the bearing shell. The oil groove thus covers the whole bearing shell in the circumferential direction.

According to an embodiment of the invention, each of the first portion and the second portion is provided with at least one oil hole.

According to an embodiment of the invention, the third portion does not comprise any holes.

According to an embodiment of the invention, the bearing shell has a substantially semicircular shape. It thus extends over an angle of approximately 180 degrees.

According to an embodiment of the invention, at least part of the third portion has a zigzag shape.

According to an embodiment of the invention, the third portion is straight.

According to an embodiment of the invention, at least part of the third portion has a serpentine shape.

The bearing according to the invention for connecting a connecting rod of a piston engine to the crankshaft of the engine comprises a bearing shell defined above.

According to an embodiment of the invention, said bearing shell forms a lower half of the bearing, and the upper half of the bearing is formed by a bearing shell comprising no oil groove or an oil groove extending only over part of the bearing shell in the circumferential direction.

The piston engine according to the invention comprises a crankshaft, connecting rod and a bearing connecting the connecting rod to the crankshaft, said bearing being a bearing defined above.

The bearing shell defined above can be used as a lower half of a bearing that connects a connecting rod of a piston engine to a crankshaft.

### Brief description of the drawings

Embodiments of the invention are described below in more detail with reference to the accompanying drawings, in which
Fig. 1 shows part of a crankshaft and a connecting rod of a piston engine and a prior art bearing shell,
Fig. 2 shows a similar view as Fig. 1 but at a different crank angle,
Fig. 3 shows a prior art bearing shell,
Fig. 4 shows a perspective view of a bearing shell according to an embodiment of the invention,
Fig. 5 shows a plan view of the bearing shell of Fig. 1,
Fig. 6 shows a bearing shell according to another embodiment of the invention, and
Fig. 7 shows a bearing shell according to still another embodiment of the invention.

### Detailed description of embodiments of the invention

Figure 1 shows part of a crankshaft 5 and a connecting rod 4 of a piston engine. The engine is a large internal combustion engine, such as a main or an auxiliary engine of a ship or an engine that is used at a power plant for producing electricity. The engine has a cylinder bore of at least 150 mm. Each cylinder of the engine is provided with a piston that moves in a reciprocating manner in the cylinder. The engine can have any reasonable number of cylinders. The connecting rod 4 connects the piston to the crankshaft 5 and converts the reciprocating motion of the piston to the rotating motion of the crankshaft 5.

The piston moves between top dead center and bottom dead center. In the situation of figure 1, the piston is at top dead center. Figure 2 illustrates a situation, where the piston is at bottom dead center.

The connecting rod 4 is connected to the crankshaft 5 by means of a bearing 3. The bearing 3 can be referred to as a big end bearing. The bearing 3 is a slide bearing. The bearing 3 is rotationally fixed to the connecting rod 4. The bearing 3 does thus not rotate relative to the connecting rod 4. The bearing 3 has an inner surface, which forms a bearing surface. The bearing surface faces a crankpin 6 of the crankshaft 5 and the bearing 3 can rotate relative to the crankpin 6. Lubricating oil is supplied between the crankpin 6 and the bearing surface of the bearing 3 to form an oil film between the parts.

The bearing 3 is formed of two bearing shells 1, 2. The bearing shells 1, 2 are semicircular parts. A first, lower bearing shell 1 forms a lower half of the bearing 3 and a second, upper bearing shell 2 forms an upper half of the bearing 3. The expression "upper half" refers to that half of the bearing 3 that is closer to the upper end of the cylinder, i.e. the top dead center. Similarly, the expression "lower half" refers to that half that is farther from the upper end of the cylinder. The longitudinal axis of the cylinder does not need to be aligned with the vertical direction, but e.g. in a V-engine the cylinders can be tilted relative to the vertical direction. The bearing 3 is thus not necessarily divided into the two halves by a horizontal plane.

Figures 1 and 2 show a prior art bearing 3. The lower bearing shell 1 is also shown in figure 3. The lower bearing shell 1 of the bearing 3 is provided with an oil groove 10 that is arranged on the inner surface of the bearing shell 1, i.e. on the bearing surface. The oil groove 10 is straight and extends in the circumferential direction of the bearing shell 1 over the whole bearing shell 1. In the axial direction of the bearing shell 1, the oil groove 10 is arranged in the middle of the bearing shell 1. Each end of the oil groove 10 is provided with a plurality of oil holes 14.

In the example of figures 1 and 2, the upper bearing shell 2 is plain. There is thus no oil groove on the bearing surface of the upper bearing shell 2.

During operation of the engine, the crankpin 6 wears. Often the wearing is not uniform, but lower part of the crankpin 6 wears more. The expression "lower part" refers to that side of the crankpin 6 that is located in top dead center position of the piston farther from the top dead center. Nor does the lower part of the crankpin 6 wear uniformly. The part aligned with the oil groove 10 wears less than the rest of the surface of the crankpin 6. Wearing of the crankpin 6 is caused for example by abrasive particles between the bearing surface and the crankpin 6. At the area aligned with the oil groove 10, there is a larger gap between the bearing surface and the crankpin 6, and the abrasive particles do thus not grind the crankpin 6 to the same extent as elsewhere.

Because of the uneven wear of the crankpin 6, gradually a protruding area, or a ridge 7, is formed at the area aligned with the oil groove 10. The enlarged views of figures 1 and 2 show an exaggerated view of the ridge 7. The height of the ridge 7 can be similar to the thickness of the oil film on the bearing surface.

As the crankshaft 5 rotates and the piston approaches bottom dead center, the ridge 7 comes into contact with the upper bearing shell 2. Because the bearing surface of the upper bearing shell 2 is plain, there is no groove that could accommodate the ridge 7. As a consequence, the bearing 3 is loaded more at the area that is aligned with the ridge 7. The non-uniform loading of the bearing 3 can cause problems. Problems can be encountered in particular after engine overhaul. When the bearing 3 has been replaced by a new bearing with an intact bearing surface, the overloading of the upper bearing shell 2 is even more likely.

The problems caused by the non-uniform wear can be reduced by the bearing shell 1 according to the invention. The bearing shell 1 according to the invention can be used as the lower bearing shell of the bearing 3 that connects the connecting rod 4 of a piston engine to a crankshaft 5. The bearing shell 1 according to the invention can thus replace the bearing shell 1 shown in figures 1-3. Figures 4-7 show some embodiments of the bearing shell 1 according to the invention.

The inner surface of the bearing shell 1 according to the invention is provided with an oil groove 10. The oil groove 10 comprises a first portion 11, a second portion 12 and a third, intermediate portion 13 connecting the first portion 11 and the second portion 13. The first, second and third portions 11, 12, 13 thus form a continuous oil groove 10 onto the bearing surface. The first portion 11 and the second portion 12 are straight and run in the circumferential direction of the bearing shell 1. The edges of the first portion 11 and the second portion 12 are thus parallel with the circumferential direction of the bearing shell 1. In the axial direction of the bearing shell 1, the first and the second portions 11, 12 are aligned with each other.

The first portion 11 and the second portion 12 have the same width with each other. In the embodiments of the figures, the width of the first portion 11 and the second portion 12 is approximately 20 percent of the width of the bearing shell 1. The width could be, for instance, in the range of 15-30 percent of the width of the bearing shell 1. In the embodiments of the figures, the first portion 11 and the second portion 12 are arranged in the axial direction of the bearing shell 1, i.e. in the axial direction of the bearing 3, in the middle of the bearing shell 1.

In the bearing shell 1 according to the invention, the third portion 13 is narrower than the first portion 11 and the second portion 12, and at least part of the third portion runs 13 in a direction that deviates from the circumferential direction of the bearing shell 1 towards a side of the bearing shell 1. Because of the narrower groove, larger part of the bearing shell 1 is in contact with the crankpin 6 and the crankpin 6 wears more uniformly. Because the direction of the third portion 13 differs from the circumferential direction, continuous non-contact portions in the circumferential direction of the bearing shell 1 can be reduced. This reduces forming of a ridge at the area of the oil groove 10.

The width of the third portion 13 can be, for instance, in the range of 20-60 percent of the width of the first portion 11 and the second portion 12.

In the embodiments of the figures, the third portion 13 is configured so that on each imaginary line drawn from the first portion 11 to the second portion 12 on the inner surface of the bearing shell 1 in the circumferential direction, there is at least one section that is outside the third portion 13. Each of said imaginary lines thus comprises a portion that is not part of the oil groove 10 but is located on the bearing surface. There is thus no area on the outer surface of the crankpin 6 that would not come into contact with the inner surface of the bearing shell 1, which helps keeping the wear of the crankpin 6 more uniform.

In the embodiments of the figures, the third portion 13 does not extend in the axial direction of the bearing shell 1 beyond the edges of the imaginary extensions of the first portion 11 and the second portion 12. The whole oil groove 10 is thus arranged at an area that is delimited by two imaginary planes that are aligned with the edges of the first portion 11 and the second portion 12. Although it is beneficial that the third portion 13 does not extend beyond the edges of the first portion 11 and the second portion 12, the third portion 13 could extend slightly beyond the edges of the first portion 11 and the second portion 12. Preferably, the third portion 13 extends in the axial direction of the bearing shell 1 from the imaginary extensions of the edges of the first portion 11 and the second portion 12 at most a distance corresponding to the width of the first portion 11 and the second portion 12 towards the sides of the bearing shell 1.

In the embodiments of the figures, the first portion 11 extends in the circumferential direction to a first end of the bearing shell 1 and the second portion 12 extends to a second end of the bearing shell 1. The oil groove 10 thus extends in the circumferential direction over the whole bearing shell 1. However, the oil groove 10 could extend in the circumferential direction of the bearing shell 1 over only part of the bearing shell 1. For instance, the oil groove 10 could extend over an angle of 100-180 degrees. If the oil groove 10 does not extend over the whole bearing shell 1, the oil groove 10 is preferably arranged in the middle of the bearing shell 1 in the circumferential direction.

In the embodiments of the figures, the third portion 13 extends in the circumferential direction of the bearing shell 1 over an angle of approximately 60 degrees. In a bearing shell 1, where the oil groove 10 extends over the whole bearing shell 1, the third portion 13 could extend over an angle of 40-100 degrees. In the embodiments of the figures, the third portion 13 is arranged in the circumferential direction in the middle of the bearing shell 1.

In the embodiments of the figures, each of the first portion 11 and the second portion 12 is provided with a plurality of oil holes 14. The oil holes 14 extend from the bottom of the oil groove 10 to the outer perimeter of the bearing shell 1. The third portion 13 does not comprise any holes.

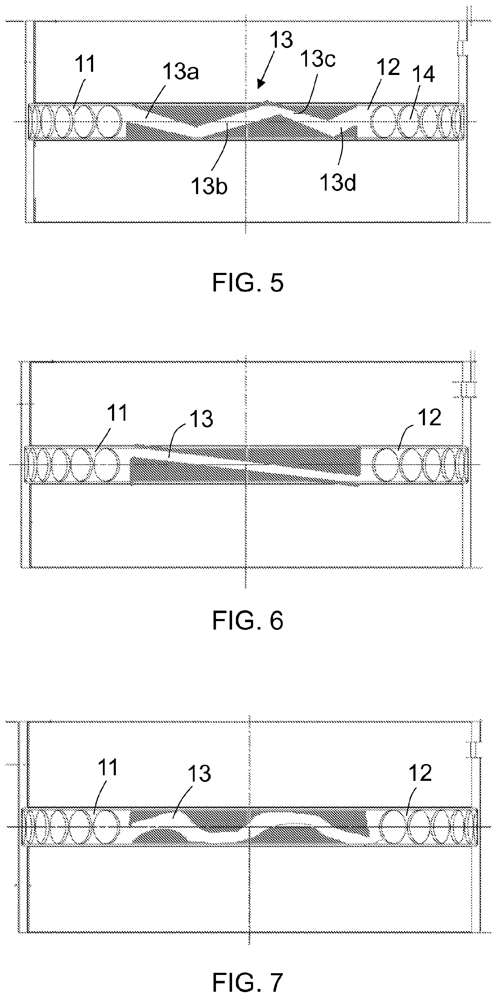

Different shapes of the third portion 13 of the oil groove 10 are possible. In the embodiment of figures 4 and 5, the third portion 13 has a zigzag shape. The third portion 13 thus comprises alternating sub-portions 13a, 13b, 13c, 13d arranged at different angles in relation to the circumferential direction of the bearing shell 1. A first sub-portion 13a is inclined from the circumferential direction in an axial direction towards a first side of the bearing shell 1, and the following sub-portion 13b is inclined towards a second side of the bearing shell 1. The first sub-portion 13a begins from a first side of the first portion 11 and ends to an imaginary extension of a second side of the first portion 11. The width and the angle of the first sub-portion 13a are configured so that the beginning of the first sub-portion 13a is located on a first side of an imaginary extension of the centerline of the first portion 11 and the end of the first sub-portion 13a is located on a second side of said extension.

In the embodiment of figure 6, the third portion 13 is straight. The third portion 13 connects to the first portion 11 on a first side of the first portion 11 and to the second portion 12 on an opposite side of the second portion 12. The width and the angle of the third portion 13 are configured so that the ends of the third portion 13 are completely on opposite sides of the centerline of the first portion 11 and the second portion 12.

In the embodiment of figure 7, the third portion 13 has a serpentine shape. The shape is thus similar to the zigzag shape of figure 5, but instead of straight sub-sections, the third portion 13 comprises curved sub-sections. Even in this embodiment, at least part of the third portion 13 is arranged so that it does not overlap with the imaginary extension of the centerline of the first portion 11 and the second portion 12.

Many other shapes of the third portion 13 would also be possible. For instance, the third portion 13 could comprise two straight sub-portions forming a V-shaped groove, or the third portion 13 could have a U-shape. Different shapes could also be combined.

Between the first portion 11 and the third portion 13 there could be a transition zone, where the width of the oil groove 10 gradually decreases. A similar transition zone could be arranged between the third portion 13 and the second portion 12.

In a bearing, in which the bearing shell 1 according to the invention is used as the lower bearing shell 1, the upper bearing shell 2 can be similar to the prior art bearing shells 2. For instance, the upper bearing shell 2 can have a bearing surface that is not provided with any oil groove. Alternatively, the upper bearing shell 2 could be provided with an oil groove extending only over part of the bearing shell 2 in the circumferential direction. For instance, the upper bearing shell 2 could be provided at its both ends with an oil groove that is configured to form a continuation for the first and second portions 11, 12 of the oil groove 10 of the lower bearing shell 1.

It will be appreciated by a person skilled in the art that the invention is not limited to the embodiments described above, but may vary within the scope of the appended claims.

## Claims

1. A bearing shell (1) for a bearing (3) that connects a connecting rod (4) of a piston engine to a crankshaft (5), the inner surface of the bearing shell (1) being provided with an oil groove (10), the oil groove (10) com-5 prising a first portion (11), and a second portion (12) said bearing shell being **characterized in that** a third, intermediate portion (13) connects the first portion (11) and the second portion (12), wherein the first portion (11) and the second portion (12) are straight and run in the circumferential direction of the bearing shell (1), and wherein the third portion (13) is narrower than the first portion (11) and the second portion (12), and at least part of the third portion (13) runs in a direction that deviates in an axial direction of the bearing shell (1) from the circumferential direction of the bearing shell (1) towards a side of the bearing shell (1).

2. A bearing shell (1) according to claim 1, wherein the third portion (13) is arranged between the imaginary extensions of the edges of the first portion (11) and the second portion (12), or wherein the third portion (13) extends from said imaginary extensions in the axial direction of the bearing shell (1) towards the sides of the bearing shell (1) at most a distance corresponding to the width of the first portion (11) and the second portion (12).

3. A bearing shell (1) according to claim 1 or 2, wherein the third portion (13) does not extend in the axial direction of the bearing shell (1) beyond the imaginary extensions of the edges of the first portion (11) and the second portion (12) and/or wherein the third portion (13) is configured so that on each imaginary line drawn from the first portion (11) to the second portion (12) on the inner surface of the bearing shell (1) in the circumferential direction, there is at least one section that is outside the third portion (13) of the oil groove (10).

4. A bearing shell (1) according to any of the preceding claims, wherein the third portion (13) extends in the circumferential direction of the bearing shell (1) over an angle of 40-100 degrees and/or wherein the third portion (13) is arranged in the circumferential direction in the middle of the bearing shell (1).

5. A bearing shell (1) according to any of the preceding claims, wherein the width of the first portion (11) and the second portion (12) is 15-30 percent of the width of the bearing shell (1) and/or wherein the width of the third portion (13) is 20-60 percent of the width of the first portion (11) and the second portion (12).

6. A bearing shell (1) according to any of the preceding claims, wherein the oil groove (10) is arranged in the axial direction of the bearing shell (1) in the middle of the bearing shell (1).

7. A bearing shell (1) according to any of the preceding claims, wherein the first portion (11) extends in the circumferential direction to a first end of the bearing shell (1) and the second portion (12) extends to a second end of the bearing shell (1).

8. A bearing shell (1) according to any of the preceding claims, wherein each of the first portion (11) and the second portion (12) is provided with at least one oil hole (14) and/or wherein the third portion (13) does not comprise any holes.

9. A bearing shell (1) according to any of the preceding claims, wherein the bearing shell (1) has a substantially semicircular shape.

10. A bearing shell (1) according to any of the preceding claims, wherein at least part of the third portion (13) has a zigzag shape and/or wherein at least part of the third portion (13) has a serpentine shape.

11. A bearing shell (1) according to any of claims 1-9, wherein the third portion (13) is straight.

12. A bearing (3) for connecting a connecting rod (4) of a piston engine to the crankshaft (5) of the engine, wherein the bearing (3) comprises a bearing shell (1) according to any of the preceding claims.

13. A bearing (3) according to claim 12, wherein said bearing shell (1) forms a lower half of the bearing (3), and the upper half of the bearing (3) is formed by a bearing shell (2) comprising no oil groove or an oil groove extending only over part of the bearing shell (2) in the circumferential direction.

14. A piston engine comprising a crankshaft (5), a connecting rod (4) and a bearing (3) connecting the connecting rod (4) to the crankshaft (5), wherein the bearing (3) is a bearing (3) according to claim 12 or 13.

15. The use of the bearing shell (1) according to any of claims 1-11 as a lower half of a bearing (3) that connects a connecting rod (4) of a piston engine to a crankshaft (5).

## Patentansprüche

1. Lagerschale (1) für ein Lager (3), das eine Verbindungsstange (4) eines Kolbenmotors mit einer Kurbelwelle (5) verbindet, wobei die innere Oberfläche der Lagerschale (1) mit einer Ölnut (10) bereitgestellt ist, wobei die Ölnut (10) einen ersten Abschnitt (11) und einen zweiten Abschnitt (12) umfasst, wobei die Lagerschale **dadurch gekennzeichnet ist, dass** ein dritter, dazwischenliegender Abschnitt (13) den ersten Abschnitt (11) und den zweiten Abschnitt (12) verbindet, wobei der erste Abschnitt (11) und der zweite Abschnitt (12) gerade sind und in der Umfangsrichtung des Lagergehäuses (1) verlaufen, und wobei der dritte Abschnitt (13) schmaler ist als der erste Abschnitt (11) und der zweite Abschnitt (12) und mindestens ein Teil des dritten Abschnitts (13) in einer Richtung verläuft, die in einer axialen Richtung des Lagergehäuses (1) von der Umfangsrichtung des Lagergehäuses (1) zu einer Seite des Lagergehäuses (1) abweicht.

2. Lagerschale (1) nach Anspruch 1, wobei der dritte Abschnitt (13) zwischen den imaginären Verlängerungen der Ränder des ersten Abschnitts (11) und des zweiten Abschnitts (12) angeordnet ist, oder wobei sich der dritte Abschnitt (13) von den imaginären Verlängerungen in axialer Richtung der Lagerschale (1) zu den Seiten der Lagerschale (1) hin höchstens über eine Strecke erstreckt, die der Breite des ersten Abschnitts (11) und des zweiten Abschnitts (12) entspricht.

3. Lagerschale (1) nach Anspruch 1 oder 2, wobei sich der dritte Abschnitt (13) in axialer Richtung der Lagerschale (1) nicht über die imaginären Verlängerungen der Ränder des ersten Abschnitts (11) und des zweiten Abschnitts (12) hinaus erstreckt und/oder wobei der dritte Abschnitt (13) konfiguriert ist, sodass auf jeder imaginären Linie, die vom ersten Abschnitt (11) zum zweiten Abschnitt (12) auf der inneren Oberfläche der Lagerschale (1) in Umfangsrichtung gezogen wird, mindestens ein Abschnitt vorhanden ist, der außerhalb des dritten Abschnitts (13) der Ölnut (10) liegt.

4. Lagerschale (1) nach einem der vorstehenden Ansprüche, wobei sich der dritte Abschnitt (13) in Umfangsrichtung der Lagerschale (1) über einen Winkel von 40-100 Grad erstreckt und/oder wobei der dritte Abschnitt (13) in Umfangsrichtung in der Mitte der Lagerschale (1) angeordnet ist.

5. Lagerschale (1) nach einem der vorstehenden Ansprüche, wobei die Breite des ersten Abschnitts (11) und des zweiten Abschnitts (12) 15-30 Prozent der Breite der Lagerschale (1) beträgt und/oder wobei die Breite des dritten Abschnitts (13) 20-60 Prozent der Breite des ersten Abschnitts (11) und des zweiten Abschnitts (12) beträgt.

6. Lagerschale (1) nach einem der vorstehenden Ansprüche, wobei die Ölnut (10) in axialer Richtung der Lagerschale (1) in der Mitte der Lagerschale (1) angeordnet ist.

7. Lagerschale (1) nach einem der vorstehenden Ansprüche, wobei sich der erste Abschnitt (11) in Umfangsrichtung zu einem ersten Ende der Lagerschale (1) und der zweite Abschnitt (12) zu einem zweiten Ende der Lagerschale (1) erstreckt.

8. Lagerschale (1) nach einem der vorstehenden Ansprüche, wobei der erste Abschnitt (11) und der zweite Abschnitt (12) jeweils mindestens ein Ölloch (14) umfassen und/oder wobei der dritte Abschnitt (13) keine Löcher umfasst.

9. Lagerschale (1) nach einem der vorstehenden Ansprüche, wobei die Lagerschale (1) eine im Wesentlichen halbkreisförmige Form aufweist.

10. Lagerschale (1) nach einem der vorstehenden Ansprüche, wobei mindestens ein Teil des dritten Abschnitts (13) eine Zickzackform aufweist und/oder wobei mindestens ein Teil des dritten Abschnitts (13) eine Serpentinenform aufweist.

11. Lagerschale (1) nach einem der Ansprüche 1 bis 9, wobei der dritte Abschnitt (13) gerade ist.

12. Lager (3) zur Verbindung einer Verbindungsstange (4) eines Kolbenmotors mit der Kurbelwelle (5) des Motors, wobei das Lager (3) eine Lagerschale (1) nach einem der vorstehenden Ansprüche umfasst.

13. Lager (3) nach Anspruch 12, wobei die Lagerschale (1) eine untere Hälfte des Lagers (3) bildet und die obere Hälfte des Lagers (3) durch eine Lagerschale (2) gebildet wird, die keine Ölnut oder eine Ölnut umfasst, die sich nur über einen Teil der Lagerschale (2) in Umfangsrichtung erstreckt.

14. Kolbenmotor, umfassend eine Kurbelwelle (5), eine Verbindungsstange (4) und ein Lager (3), das die Verbindungsstange (4) mit der Kurbelwelle (5) verbindet, wobei das Lager (3) ein Lager (3) nach Anspruch 12 oder 13 ist.

15. Verwendung der Lagerschale (1) nach einem der Ansprüche 1 bis 11 als untere Hälfte eines Lagers (3), das eine Verbindungsstange (4) einer Kolbenmaschine mit einer Kurbelwelle (5) verbindet.

## Revendications

1. Coquille de palier (1) pour un palier (3) qui relie une bielle (4) d'un moteur à piston à un vilebrequin (5), la surface intérieure de la coquille de palier (1) étant munie d'une rainure d'huile (10), la rainure d'huile (10) comprenant une première partie (11) et une deuxième partie (12), ladite coquille de palier étant **caractérisée en ce qu'**une troisième partie intermédiaire (13) relie la première partie (11) et la deuxième partie (12), dans laquelle la première partie (11) et la deuxième partie (12) sont droites et se prolongent dans la direction circonférentielle de la coquille de palier (1), et dans laquelle la troisième partie (13) est plus étroite que la première partie (11) et la deuxième partie (12), et au moins une partie de la troisième partie (13) se prolongent dans une direction qui dévie axialement de la direction circonférentielle de la coquille de palier (1) vers un côté de la coquille de palier (1).

2. Coquille de palier (1) selon la revendication 1, dans laquelle la troisième partie (13) est agencée entre les extensions imaginaires des bords de la première partie (11) et de la deuxième partie (12), ou dans laquelle la troisième partie (13) se prolonge à partir desdites extensions imaginaires dans la direction axiale de la coquille de palier (1) vers les côtés de la coquille de palier (1) sur une distance au plus correspondant à la largeur de la première partie (11) et de la deuxième partie (12).

3. Coquille de palier (1) selon la revendication 1 ou 2, dans laquelle la troisième partie (13) ne se prolonge pas dans la direction axiale de la coquille de palier (1) au-delà des extensions imaginaires des bords de la première partie (11) et de la deuxième partie (12) et/ou dans laquelle la troisième partie (13) est configurée de telle sorte que sur chaque ligne imaginaire tracée de la première partie (11) à la deuxième partie (12) sur la surface intérieure de la coquille de palier (1) dans la direction circonférentielle, il existe au moins une section qui se trouve à l'extérieur de la troisième partie (13) de la rainure d'huile (10).

4. Coquille de palier (1) selon l'une quelconque des revendications précédentes, dans laquelle la troisième partie (13) se prolonge dans la direction circonférentielle de la coquille de palier (1) sur un angle de 40 à 100 degrés et/ou dans laquelle la troisième partie (13) est agencée dans la direction circonférentielle au milieu de la coquille de palier (1).

5. Coquille de palier (1) selon l'une quelconque des revendications précédentes, dans laquelle la largeur de la première partie (11) et de la deuxième partie (12) représente 15 à 30 pour cent de la largeur de la coquille de palier (1) et/ou dans laquelle la largeur de la troisième partie (13) représente 20 à 60 pour cent de la largeur de la première partie (11) et de la deuxième partie (12).

6. Coquille de palier (1) selon l'une quelconque des revendications précédentes, dans laquelle la rainure d'huile (10) est agencée dans la direction axiale de la coquille de palier (1) au milieu de la coquille de palier (1).

7. Coquille de palier (1) selon l'une quelconque des revendications précédentes, dans laquelle la première partie (11) se prolonge dans la direction circonférentielle jusqu'à une première extrémité de la coquille de palier (1) et la deuxième partie (12) se prolonge jusqu'à une deuxième extrémité de la coquille de palier (1).

8. Coquille de palier (1) selon l'une quelconque des revendications précédentes, dans laquelle chacune de la première partie (11) et de la deuxième partie (12) est munie d'au moins un trou d'huile (14) et/ou dans laquelle la troisième partie (13) ne comprend aucun trou.

9. Coquille de palier (1) selon l'une quelconque des revendications précédentes, dans laquelle la coquille de palier (1) a une forme sensiblement semi-circulaire.

10. Coquille de palier (1) selon l'une quelconque des revendications précédentes, dans laquelle au moins une partie de la troisième partie (13) a une forme en zigzag et/ou dans laquelle au moins une partie de la troisième partie (13) a une forme serpentine.

11. Coquille de palier (1) selon l'une quelconque des revendications 1 à 9, dans laquelle la troisième partie (13) est droite.

12. Palier (3) destiné à relier une bielle (4) d'un moteur à piston au vilebrequin (5) du moteur, dans lequel le palier (3) comprend une coquille de palier (1) selon l'une quelconque des revendications précédentes.

13. Palier (3) selon la revendication 12, dans lequel ladite coquille de palier (1) forme une moitié inférieure du palier (3), et la moitié supérieure du palier (3) est formée par une coquille de palier (2) ne comprenant aucune rainure d'huile ou une rainure d'huile ne se prolongeant que sur une partie de la coquille de palier (2) dans la direction circonférentielle.

14. Moteur à piston comprenant un vilebrequin (5), une bielle (4) et un palier (3) reliant la bielle (4) au vilebrequin (5), dans lequel le palier (3) est un palier (3) selon la revendication 12 ou 13.

15. Utilisation de la coquille de palier (1) selon l'une quelconque des revendications 1 à 11 comme moitié inférieure d'un palier (3) qui relie une bielle (4) d'un moteur à piston à un vilebrequin (5).
